# EUROPÄISCHE PATENTANMELDUNG

(11) **EP 2 413 113 A1**
(43) Veröffentlichungstag der Anmeldung: **01.02.2012**
(21) Anmeldenummer: 11173532.0
(22) Anmeldetag: 12.07.2011
(51) Int. Cl.: G01G 19/44, G01G 21/23

(54) **Personenwaage**

(30) Priorität: 28.07.2010 DE 102010038578
(71) Anmelder: BSH Bosch und Siemens Hausgeräte GmbH, 81739 München (DE)
(72) Erfinder: Jirjis, Frank, 81371 München (DE)

(57) **Zusammenfassung**

Die vorliegende Erfindung betrifft eine Personenwaage (1) mit zumindest einer Wägezelle (3), einer auf die zumindest eine Wägezelle (3) wirkenden Wiegeplatte (2) mit einer Standfläche für eine Person, und mit einer Anzeige zum Anzeigen zumindest der auf die Wiegeplatte (2) einwirkenden Gewichtskraft die gekennzeichnet ist, durch zumindest eine sich an einem am Bodenteil der Waage (1) befindlichen Rolleinrichtung (4) mit einer mit einer Vorspannkraft beaufschlagten Rolle (5) oder Rutschkufe, die, sobald eine auf die Wiegeplatte (2) einwirkende Gewichtskraft die Vorspannkraft übersteigt, in ein Federgehäuse (9) einfedert.

## Beschreibung

Die Erfindung betrifft eine Personenwaage mit zumindest einer Wägezelle, einer auf die zumindest eine Wägezelle wirkenden Wiegeplatte mit einer Standfläche für eine Person, und mit einer Anzeige zum Anzeigen zumindest der auf die Wiegeplatte einwirkenden Gewichtskraft.

Derartige Personenwaagen sind im Stand der Technik bekannt und finden insbesondere in Privathaushalten breite Anwendung.

Im Bade- oder Schlafzimmer werden die üblicherweise flach ausgebildeten und auf dem Fußboden aufsitzenden Personenwaagen oft zu Aufbewahrungszwecken unter Schrankmöbel oder Toilettensitze geschoben.

Zur Benutzung müssen sie dann unter dem entsprechenden Schrankmöbel oder der Toilette hervorgeholt und in eine geeignete Wiegeposition gebracht werden, um schließlich nach dem eigentlichen Wiegevorgang wieder unter das Möbel etc. geschoben zu werden. Alle diese Tätigkeiten sind in unmittelbarer Bodennähe durchzuführen, so dass sich der Benutzer bücken muss, um die Waage händisch zu positionieren. Insbesondere ältern Personen fällt dies schwer, wodurch die Waagen oft an einem freien Platz im Bade- oder Schlafzimmer aufbewahrt werden. Diese frei positionieren Waagen stellen nicht nur ein Verletzungsrisiko dar, sondern nehmen auch noch Nutzfläche in Anspruch.

Aufgabe der vorliegenden Erfindung ist es eine gattungsgemäße Personenwaage derart weiterzubilden, dass sie einfach zu positionieren ist und ohne umständliche Bewegungen unter Schrankmöbel oder dergleichen geschoben werden kann.

Diese Aufgabe wird mit den Merkmalen des unabhängigen Anspruchs 1 gelöst. Vorteilhafte Ausführungsformen der Erfindung sind in den abhängigen Ansprüchen angegeben.

Die Erfindung baut auf einer gattungsgemäßen Personenwaage dadurch auf, dass mittels zumindest einer sich an einem am Bodenteil der Waage befindlichen Rolleinrichtung mit einer mit einer Vorspannkraft beaufschlagten Rolle oder Rutschkufe, die, sobald eine auf die Wiegeplatte einwirkende Gewichtskraft die Vorspannkraft übersteigt, in ein Federgehäuse einfedert, die Waage verfahren werden kann.

Das Verfahren der Waage kann dabei beispielsweise mittels eines auf die Wiegeplatte aufgelegten großen Zehs oder Fußes durch Ziehen oder Schieben erfolgen; d.h. ein umständliches Bücken und händisches Positionieren der Waage entfällt. Hierbei erweist sich eine Rolle für einen harten Bodebelag, beispielsweise einen Fliesenboden und eine Rutschkufe für einen weichen Bodenbelag, beispielsweise einen Teppichboden, als vorteilhaft.

Sobald die Personenwaage in eine geeignete Wiegeposition verfahren ist, und der Benutzer auf die Wiegeplatte tritt, federt eine Rolle oder Rutschkufe der Rolleinrichtung in ein Federgehäuse ein, so dass die Waage sicher und unverfahrbar auf dem Fußboden aufsitzt. Nach dem eigentlichen Wiegevorgang tritt die mit einer Vorspannkraft beaufschlagte Rolle oder Rutschkufe der Rolleinrichtung wieder hervor, und die Waage läßt sich leicht über den Fußboden in eine Aufbewahrungsposition verfahren.

Eine vorteilhafte Ausgestaltung der Erfindung ist im Patentanspruch 2 angegeben. Die Weiterbildung nach Anspruch 2 ermöglicht es, die Waage im Wesentlichen linear zu verfahren. Mittels zweier walzenförmiger, sich über ein Breite b erstreckender Rollen kann die Waage unter einem Möbel oder dergleichen geradlinig herausgezogen werden. Das hat den Vorteil dass nach dem Herausziehen der Waage und der anschließenden Benutzung, diese wiederum geradlinig in die ursprüngliche Position eingeschoben werden kann. Bei einem begrenzten Stauraum, insbesondere bei einer Breite des Stauraums, die im Wesentlichen der der Waage entspricht, entfällt damit ein Verkanten zwischen Waage und den Begrenzungen des Stauraums.

Die mit einer Vorspannkraft beaufschlagte walzenförmige Rolle einer erfindungsgemäßen Rolleinrichtung kann in dieser Ausgestaltung beispielsweise von einer Rolle mit feststehenden oder umlaufenden Achsen gebildet sein, wobei die Achsen federnd gelagert in einem Gehäuse geführt sind. Sobald die auf die Wiegeplatte einwirkende Gewichtskraft die durch die Feder aufgebaute Vorspannkraft übersteigt, federt die Rolle der Rolleinrichtung in das Gehäuse ein, wodurch die Waage sicher auf dem Fußboden aufsitzt.

Eine weitere vorteilhafte Ausgestaltung der Erfindung ist im Patentanspruch 3 angegeben. Die Weiterbildung nach Anspruch 3 ermöglicht es, die Waage in alle Richtungen zu verfahren. Mittels vier kugelförmiger Rollen wird der Reibungswiderstand beim Verfahren der Waage derart verringert, dass nur ein minimaler Kraftaufwand, beispielsweise durch ein leichtes antippen mit dem großen Zeh, nötig ist, um die Waage in eine beliebige Wiegeposition zu verfahren.

In einer vorteilhaften Weiterbildung wird die Rolleinrichtung von einer im Federkern einer Schrauben- oder Spiralfeder gelagerte Kugel aus einem geeigneten Material, wie beispielsweise Stahl oder Hartkunststoff, gebildet, wobei Feder und Kugel in einem Federgehäuse geführt sind.

In einer weiteren vorteilhaften Weiterbildung ist die Rolleinrichtung als Kugelrolle ausgebildet. Hierbei ist die kugelförmige Rolle der Rolleinrichtung in einer Aufnahme eingehaust und auf mehreren kleinen Tragkugeln gelagert, die auf einer gehärteten Laufschale zirkulieren. Die Aufnahme selbst ist in einem Federgehäuse federnd gelagert.

Eine zweckmäßige Ausgestaltung sieht vor, dass sich vier Federgehäuse vom Bodenteil der Waage in Richtung Fußboden erstrecken. Das hat den Vorteil, dass die Gehäuse nicht in dem, in der Regel aus Glas gefertigten Bodenteil integriert werden müssen. Dies bedingt jedoch die Ausbildung oder Anordnung der zumindest einen Wägezelle, beispielsweise eines Piezoelements, in einem Abstand a vom Bodenteil der Waage, der der Erstreckung der Federgehäuse entspricht.

Die zumindest eine Wägezelle kann beispielsweise auf der Unterseite eines Standfußes der Waage angeordnet sein. In dieser Ausgestaltung ruht die Personenwaage unmittelbar auf der zumindest einen Wägezelle, sobald die Rollen der Rolleinrichtungen eingefedert sind.

In einer alternativen Ausgestaltung ist die zumindest eine Wägezelle zwischen der Wiegeplatte und einem Federgehäuse angeordnet, dergestalt, dass nach dem Einfedern der Rolleinrichtung die die Vorspannkraft übersteigende, auf die Wiegeplatte einwirkende Gewichtskraft, an dem Federgehäuse anliegt. In dieser Ausgestaltung ruht die Personenwaage mittelbar auf der zumindest einen Wägezelle, sobald die Rollen der Rolleinrichtungen eingefedert sind. Demgemäß übernimmt in dieser Ausführungsform ein Federgehäuse die Aufgabe eines Standfußes der Waage.

Ein Mikroprozessor erhält von einer Wägezelle, beispielsweise einem Piezoelement einen Spannungswert, der dem mit der Wägezelle gemessenen Gewicht entspricht, und wandelt den Spannungswert, in eine entsprechende Gewichtskraft um. Zu der Gewichtskraft kann mittels des Mikroprozessors die Vorspannkraft F (Konstante) addiert werden, die zuvor von der auf die Wiegeplatte einwirkenden Gewichtskraft zu überwinden war. Die Vorspannkraft F ist eine Konstante und über die Beziehung F = D x ΔL mit D Federkonstante und ΔL Längenänderung definiert. Schließlich wird die auf die Wiegeplatte einwirkende Gesamtgewichtskraft beispielsweise in kg von einer LED-Anzeige angezeigt.

Die vorstehend genannten und nachstehend noch zu erläuternden Merkmale sind nicht nur in der jeweils angegebenen Kombination, sondern auch in anderen Kombinationen oder in Alleinstellung verwendbar, ohne den Rahmen der Erfindung zu verlassen.

Zwei Ausführungsbeispiele der Erfindung sind in den Zeichnungen rein schematisch dargestellt und werden nachfolgend näher beschrieben, wobei sich gleiche Bezugszeichen auf gleiche oder ähnliche oder funktional gleiche Bauteile beziehen. Es zeigen:
- Fig. 1: eine geschnittene Seitenansicht eines ersten Ausführungsbeispiels einer erfindungsgemäßen Personenwaage,
- Fig. 2: eine geschnittene Seitenansicht eines zweiten Ausführungsbeispiels einer erfindungsgemäßen Personenwaage,
- Fig. 3: eine geschnittene Seitenansicht einer ersten Rolleinrichtung und
- Fig. 4: eine geschnittene Seitenansicht einer zweiten Rolleinrichtung.

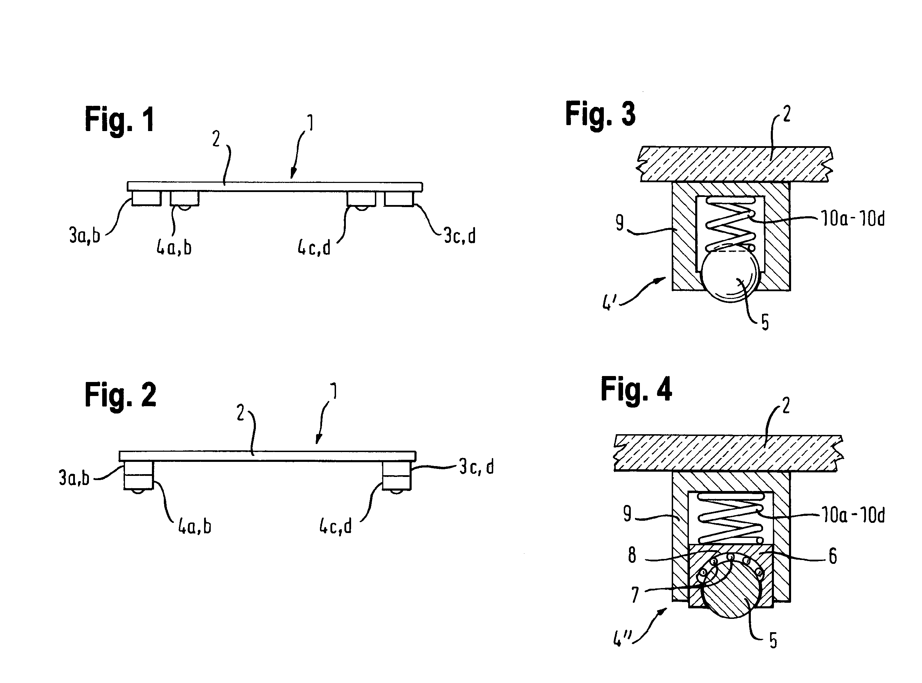

Die Personenwaage 1 in den Figuren 1 und 2 ist eine elektronische Waage mit einer Wiegeplatte 2, und umfaßt eine Anzeige in Form einer LCD-Anzeige (nicht in der Figur) sowie vier aus herkömmlichen elektronischen Waagen bekannte Piezoelemente 3a bis 3d. Die Personenwaage 1 weist ferner einen Mikroprozessor (nicht in der Figur) auf, der mit den Wägezellen 3a bis 3d und der Anzeige zum Anzeigen der mittels des Mikroprozessors ermittelten Gewichtskraft verbunden ist. Ferner weist die Waage 1 eine Batterie (nicht in der Figur) zur Stromversorgung des Mikroprozessors und der Anzeige auf.

Im Ruhezustand, d.h. wenn keine oder nur eine die Vorspannkraft der Rolleinrichtungen nicht übersteigende Gewichtskraft auf die Wiegeplatte einwirkt, ruht die Personenwaage auf vier Rolleinrichtungen 4a bis 4d. Sobald die auf die Wiegeplatte 2 einwirkende Gewichtskraft die Vorspannkraft der Rolleinrichtungen übersteigt, federn die Rollen der Rolleinrichtungen ein, und die überschießende Gewichtskraft wirkt gemäß Fig. 1 unmittelbar und gemäß Fig. 2 mittelbar auf die Piezoelemente 3a bis 3d ein.

Gemäß Fig. 3 ist die mit einer Vorspannkraft beaufschlagte Rolleinrichtung 4' als eine im Federkern einer Schrauben- oder Spiralfeder 10 gelagerte Kugel 5 aus einem geeigneten Material, wie beispielsweise Stahl oder Hartkunststoff ausgebildet, wobei Feder und Kugel in einem Federgehäuse 9 geführt sind. Sobald eine auf die Wiegeplatte 2 einwirkende Gewichtskraft die durch die vier Federn 10a bis 10d aufgebrachte Vorspannkraft übersteigt, federt die kugelförmige Rolle 5 der Rolleinrichtung 4' in das Federgehäuse 9 ein, und die Personenwaage 1 ruht unmittelbar (Fig. 1) oder mittelbar (Fig. 2) auf den Piezoelemente 3a bis 3d.

Gemäß Fig. 4 ist die mit einer Vorspannkraft beaufschlagte Rolleinrichtung 4" als Kugelrolle ausgebildet. Die kugelförmige Rolle 5 der Rolleinrichtung 4" ist in einer Aufnahme 6 eingehaust und auf mehreren kleinen Tragkugeln 7 gelagert, die auf einer gehärteten Laufschale 8 zirkulieren. Die Aufnahme 8 selbst ist in einem Federgehäuse 9 federnd gelagert. Sobald eine auf die Wiegeplatte 2 einwirkende Gewichtskraft die durch die vier Federn 10a bis 10d aufgebrachte Vorspannkraft übersteigt, federt die Aufnahme 6 der Rolleinrichtung 4" in das Federgehäuse 9 ein, und die Personenwaage 1 ruht unmittelbar (Fig. 1) oder mittelbar (Fig. 2) auf den Piezoelemente 3a bis 3d.

Der Mikroprozessor erhält von jedem Piezoelemente 3a bis 3d einen Spannungswert, der dem jeweiligen mit dem Piezoelement gemessenen Gewicht entspricht. Schließlich wandelt der Mikroprozessor die Spannungswerte, in eine entsprechende Gewichtskraft um und addiert die vier auf diese Weise erhaltenen Gewichtskräfte zu einer Gesamtgewichtskraft.

Zu der Gesamtgewichtskraft wird mittels des Mikroprozessors die vierfache Vorspannkraft F (Konstante) addiert, die zuvor von der auf die Wiegeplatte einwirkenden Gewichtskraft zu überwinden war. Die Vorspannkraft F ist eine Konstante und über die Beziehung F = D x ΔL mit D Federkonstante und ΔL Längenänderung definiert. Schließlich wird die auf die Wiegeplatte einwirkende Gewichtskraft beispielsweise in kg von einer Anzeige angezeigt.

### Bezugszeichenliste

- 1: Personenwaage
- 2: Wiegeplatte
- 3a bis 3d: Piezoelemente
- 4a bis 4d: Rolleinrichtungen
- 4', 4": Rolleinrichtungen
- 5: Kugel
- 6: Aufnahme
- 7: Tragkugeln
- 8: Laufschale
- 9: Federgehäuse
- 10a bis 10d: Federn

## Patentansprüche

1. Personenwaage (1) mit zumindest einer Wägezelle (3), einer auf die zumindest eine Wägezelle (3) wirkenden Wiegeplatte (2) mit einer Standfläche für eine Person, und mit einer Anzeige zum Anzeigen zumindest der auf die Wiegeplatte (2) einwirkenden Gewichtskraft, **gekennzeichnet durch** zumindest eine sich an einem am Bodenteil der Waage (1) befindlichen Rolleinrichtung (4) mit einer mit einer Vorspannkraft beaufschlagten Rolle (5) oder Rutschkufe, die, sobald eine auf die Wiegeplatte (2) einwirkende Gewichtskraft die Vorspannkraft übersteigt, in ein Federgehäuse (9) einfedert.

2. Personenwaage nach Anspruch 1, **gekennzeichnet durch** zwei Rolleinrichtungen (4) mit walzenförmigen, sich über ein Breite b erstreckenden Rollen (5).

3. Personenwaage nach Anspruch 2, **dadurch gekennzeichnet, dass** die Rolleinrichtung (4) von einer Rolle (5) mit feststehenden oder umlaufenden Achsen gebildet ist, und dass die Achsen federnd gelagert in einem Gehäuse (9) geführt sind.

4. Personenwaage nach Anspruch 1, **gekennzeichnet durch** vier Rolleinrichtungen (4'a - 4'd), die von je einer im Federkern einer Schrauben- oder Spiralfeder (10) gelagerten Kugel (5) gebildet sind, wobei Feder (10) und Kugel (5) in einem Federgehäuse (9) geführt sind.

5. Personenwaage nach Anspruch 1, **gekennzeichnet durch** vier Rolleinrichtungen 4"a - 4"d), die von je einer Kugelrolle gebildet sind.

6. Personenwaage nach einem der Ansprüche 1 bis 5, **dadurch gekennzeichnet, dass** die zumindest eine Wägezelle (3) an der Unterseite eines Standfußes oder zwischen der Wiegeplatte (2) und einem Federgehäuse (9) angeordnet ist.

7. Personenwaage nach einem der Ansprüche 1 bis 6, **gekennzeichnet durch** vier Rolleinrichtungen (4), vier Piezoelemente (3) und einem Mikrokontroller, der zu der auf die Wiegeplatte (2) einwirkenden Gewichtskraft die vierfache Vorspannkraft addiert.
